# EUROPEAN PATENT SPECIFICATION

(11) **EP 1 099 269 B1**
(45) Date of publication and mention of the grant of the patent: **17.03.2004**
(21) Application number: 99951363.3
(22) Date of filing: 01.06.1999
(51) Int. Cl.: H01M 8/04, H01M 8/06, H01M 8/10

(54) **DIRECT MASS AND HEAT TRANSFER FUEL CELL POWER PLANT**
BRENNSTOFFZELLENANLAGE MIT DIREKTEM MASSE- UND WÄRMETRANSPORT
CENTRALE A PILES A COMBUSTIBLES, A TRANSFERT DIRECT DE CHALEUR ET DE MASSE

(30) Priority: 03.06.1998 US 89856
(43) Date of publication of application: 16.05.2001
(73) Proprietor: International Fuel Cells, LLC, South Windsor, CT 06074 (US)
(72) Inventor: FULLER, Thomas, F., Glastonbury, CT 06033 (US); MARGIOTT, Paul, R., South Windsor, CT 06074 (US); VAN DINE, Leslie, L., Manchester, CT 06040 (US)
(74) Representative: Klunker . Schmitt-Nilson . Hirsch
(86) International application number: PCT/US1999/012255
(87) International publication number: WO 1999/067829

(56) References cited:
- EP-A- 1 022 796
- WO-A-99/05741
- US-A- 4 365 006
- US-A- 5 360 679
- US-A- 5 503 944
- US-A- 5 542 968
- US-A- 5 660 048
- US-A- 5 759 712
- PATENT ABSTRACTS OF JAPAN vol. 018, no. 414 (E-1587), 3 August 1994 (1994-08-03) & JP 06 124722 A (MITSUBISHI HEAVY IND LTD), 6 May 1994 (1994-05-06)

## Description

### Technical Field

The present invention relates to fuel cell power plants that operate at about ambient pressures and are suited for usage in transport vehicles, as portable power plants, or as stationary power plants, and the invention especially relates to a fuel cell power plant that transfers mass and heat, such as water vapor, exiting the plant back into the plant to enhance water balance and energy efficiency of the plant.

### Background of the Invention

Fuel cell power plants are well-known and are commonly used to produce electrical energy from reducing and oxidizing fluids to power electrical apparatus such as apparatus on-board space vehicles. In such power plants, a plurality of planar fuel cells are typically arranged in a stack surrounded by an electrically insulating frame that defines manifolds for directing flow of reducing, oxidizing, coolant and product fluids. Each individual cell generally includes an anode electrode and a cathode electrode separated by an electrolyte. A reactant or reducing fluid such as hydrogen is supplied to the anode electrode, and an oxidant such as oxygen or air is supplied to the cathode electrode. In a cell utilizing a proton exchange membrane as the electrolyte, the hydrogen electrochemically reacts at a surface of an anode catalyst to produce hydrogen ions and electrons. The electrons are conducted to an external load circuit and then returned to the cathode electrode, while the hydrogen ions transfer through the electrolyte to the cathode electrode, where they react with the oxidant and electrons to produce water and release thermal energy.

The anode and cathode electrodes of such fuel cells are separated by different types of electrolytes depending on operating requirements and limitations of the working environment of the fuel cell. One such electrolyte is a proton exchange membrane ("PEM") electrolyte, which consists of a solid polymer well-known in the art. Other common electrolytes used in fuel cells include phosphoric acid or potassium hydroxide held within a porous, nonconductive matrix between the anode and cathode electrodes.

It has been found that PEM cells have substantial advantages over cells with liquid acid or alkaline electrolytes in satisfying specific operating parameters because the membrane of the PEM provides a barrier between the reducing fluid and oxidant that is more tolerant to pressure differentials than a liquid electrolyte held by capillary forces within a porous matrix. Additionally, the PEM electrolyte is fixed, and cannot be leached from the cell, and the membrane has a relatively stable capacity for water retention. As is well-known however, PEM cells have significant limitations especially related to liquid water transport to, through and away from the PEM, and related to simultaneous transport of gaseous reducing and oxidant fluids to and from the electrodes adjacent opposed surfaces of the PEM. The prior art includes many efforts to minimize the effect of those limitations.

In operation of a fuel cell employing a PEM, the membrane is saturated with water, and the anode electrode adjacent the membrane must remain wet. As hydrogen ions produced at the anode electrode transfer through the electrolyte, they drag water molecules in the form of hydronium ions with them from the anode to the cathode. Water also transfers back to the anode from the cathode by osmosis. Product water formed at the cathode electrode is removed by evaporation or entrainment into a circulating gaseous stream of oxidant, or by capillary action into and through a porous fluid transport layer adjacent the cathode. Porous water transport plates supply liquid water from a supply of coolant water to the anode electrode and remove water from the cathode electrode returning it back to the coolant water supply, and the plates thereby also serve to remove heat from the electrolyte and electrodes.

In operation of PEM fuel cells, it is critical that a proper water balance be maintained between a rate at which water is produced at the cathode electrode and rates at which water is removed from the cathode and at which liquid water is supplied to the anode electrode. An operational limit on performance of a fuel cell is defined by an ability of the cell to maintain the water balance as electrical current drawn from the cell into the external load circuit varies and as an operating environment of the cell varies. For PEM fuel cells, if insufficient water is returned to the anode electrode, adjacent portions of the PEM electrolyte dry out thereby decreasing the rate at which hydrogen ions may be transferred through the PEM and also resulting in cross-over of the reducing fluid leading to local over heating. Similarly, if insufficient water is removed from the cathode, the cathode electrode may become flooded effectively limiting oxidant supply to the cathode and hence decreasing current flow. Additionally, if too much water is removed from the cathode by the gaseous stream of oxidant, the cathode may dry out limiting ability of hydrogen ions to pass through the PEM, thus decreasing cell performance.

As fuel cells have been integrated into power plants developed to power transportation vehicles such as automobiles, trucks, buses, etc., maintaining an efficient water balance within the power plant has become a greater challenge because of a variety of factors. For example, with a stationary fuel cell power plant, water lost from the plant may be replaced by water supplied to the plant from off-plant sources. With a transportation vehicle, however, to minimize weight and space requirements of a fuel cell power plant the plant must be self-sufficient in water to be viable. Self-sufficiency in water means that enough water must be retained within the plant to offset losses from a stream of reactant fluid to efficiently operate the plant. For example, any water exiting the plant through a cathode exhaust stream of gaseous oxidant or through an anode exhaust stream of gaseous reducing fluid must be balanced by water produced electrochemically at the cathode and retained within the plant.

One approach to enhancing water balance for fuel cell power plants in transportation vehicles is to pressurize the cell and related components to increase reactant concentrations in high pressure gaseous streams and thereby reduce water loss through plant exhaust streams. Such pressurized fuel cell power plants, however, require additional cost, weight and control apparatus in providing appropriate pressure housings and controls, and pressurized plants require additional energy derived from the plant to operate pressurizing pumps, valves, fans, etc., and are not practical for portable power plants.

Another common approach to enhancing water balance is use of condensing heat exchangers downstream of power plant exhaust streams wherein the exhaust streams are cooled to a temperature at or below their dew points to precipitate liquid out of the exhaust streams so that the liquid may be returned to the power plant. An example of a PEM fuel cell power plant using a condensing heat exchanger is shown in U.S. Patent No. 5,573,866 that issued on November 12, 1996 to Van Dine et al., and is assigned to the assigneee of the present invention, and which patent is hereby incorporated herein by reference. Many other fuel cell power plants that use one or more condensing heat exchangers are well-known in the art, and they typically use ambient air streams as a cooling fluid passing through the exchanger to cool the plant exhaust streams. In Van Dine et al., the heat exchanger is used to cool an exhaust stream exiting a cathode chamber housing the cathode electrode. Prior to entering the cathode housing, the same stream provides air as the oxidant for the cathode electrode, and upon leaving the chamber the stream includes evaporated product water and some portion of methanol, the reducing fluid, that has passed through the PEM. The condensing heat exchanger passes the cathode exhaust stream in heat exchange relationship with a stream of cooling ambient air, and then directs condensed methanol and water indirectly through a piping system back to an anode side of the cell.

While condensing heat exchangers have enhanced water balance and energy efficiency of ambient and pressurized fuel cell power plants, the heat exchangers encounter decreasing water recovery efficiency as ambient temperatures increase. Where the power plant is to power a transportation vehicle such as an automobile, the plant will be exposed to an extremely wide range of ambient temperatures. For example where an ambient air coolant stream passes through a heat exchanger, performance of the exchanger will vary as a direct function of the temperature of the ambient air because decreasing amounts of liquid precipitate out of power plant exhaust streams as the ambient air temperature increases.

An additional complication of known fuel cell power plants designed for use in transportation vehicles is also related to fluctuations in ambient air conditions. Fuel cells of such plants typically utilize ambient air as the oxidant directed to the cathode electrode. Hot and dry ambient air increases a risk that the cathode electrode will dry out. Consequently, many efforts have been undertaken to prevent drying out of the cathode electrode and adjacent electrolyte especially in PEM fuel cells, including: directing liquid condensate from heat exchangers to humidify gaseous reactant and oxidant streams entering the cell; adding porous support layers and water transport plates in fluid communication with the electrodes for movement of coolant water through adjacent cells; and, generating a pressure differential on the anode side of the cell wherein gaseous reducing fluids are maintained at a slightly higher pressure than coolant water and anode supply water passing through the porous support layers adjacent reducing gas distribution channels so that the pressure differential assists water transport through the porous support layers and cell. Such efforts at maintaining efficient water balance involve additional cost, weight and volume, and often require complicated control apparatus.

Further problems of maintaining water balance in known fuel cell power plants are associated with components necessary to process hydrocarbon fuels, such as methane, natural gas, gasoline, or diesel fuel, etc., into an appropriate reducing fluid that provides a hydrogen rich fluid to the anode electrode. Such fuel processing components of a fuel cell power plant typically include an auxiliary burner that generates steam; a steam duct into which the hydrocarbon fuel is injected; and an autothermal reformer that receives the steam, fuel mixture and a small amount of air and transforms the mixture into a hydrogen-enriched reducing fluid appropriate for delivery to the anode electrode of the fuel cell. These fuel processing components also include water and energy requirements that are part of an overall water balance and energy requirement of the fuel cell power plant. Water made into steam in a steam generator of the auxiliary burner must be replaced by water recovered from the plant such as by condensing heat exchangers in the cathode exhaust stream and associated piping. Additionally, process oxidant streams that also support the auxiliary burner and autothermal reformer must be maintained within a stable humidity range to prevent variations in performance of those components. When the oxidant process streams for the fuel processing components are supplied by ambient air, humidifying the streams to stabilize performance of those fuel processing components further complicates maintenance of a self-sufficient water balance of such a fuel cell power plant.

Accordingly, known pressurized plants and plants that employ ambient air as the cathode oxidant or that employ ambient air for condensing heat exchangers and/or fuel processing components are incapable of maximizing an efficient water balance and minimizing operating energy requirements because of their above described characteristics. It is therefore highly desirable to produce a fuel cell power plant that achieves an efficient water balance for the entire plant and minimizes plant operating energy requirements.

WO 99/05741 which has a filing date in advance of the priority date of the present application but was granted only after such application discloses a fuel cell gas management system comprising a cathode humification system, an electrode humidity retention system, an cooling water processing system. It is especially well suited to automotive applications. The cathode humification system comprises compressing means for pressurizing air to be input to the fuel cell's cathode for use as the fuel cell's oxidant, and a sensible and latent heat transfer device, such as an enthalpy wheel, for conditioning the pressurized oxidant.

US-5,759,712 relates to a miniature fuel cell system including a moisture and heat recovery subsystem formed by an intake air duct and a cathode exhaust duct which are arranged in parallel to each other and separated from each other by a moisture permeable membrane (Nafion). A blower is provided for propelling gas through this counter flow duct. The ducts are in fluid connection with each other in the vicinity of the cathode so that mixing between the intake air and the cathode exhaust gas may occur. This document does not teach a separator housing.

### Disclosure of the Invention

The invention is a direct mass and heat transfer fuel cell power plant according to claim 1 and a method according to claim 9. The power plant includes two major components being at least one fuel cell and a direct mass and heat transfer device. The fuel cell includes an electrolyte that has opposed first and second major surfaces, an anode electrode supported by a porous anode support layer in intimate contact with the first major surface and a cathode electrode supported by a porous cathode support layer in intimate contact with the second major surface, a hydrogen rich reducing fluid stream flowing at about ambient pressure through the anode support layer in contact with the anode electrode, and an oxidant stream such as air flowing at about ambient pressure through the cathode support layer in contact with the cathode electrode to provide oxidant to the cathode electrode and to remove by evaporation and entrainment into a cathode exhaust stream product water formed at the cathode along with water carried through the electrolyte from the anode electrode or any humidification water in the oxidant stream. The direct mass and heat transfer device passes the stream of oxidant upstream of the fuel cell in mass transfer relationship with the cathode exhaust stream downstream of the cell so that mass such as water picked up by the cathode exhaust stream passes directly through a transfer medium of the mass and heat transfer device into the oxidant stream entering the cell, thereby humidifying and adding heat to the oxidant stream entering the cell. The direct mass transfer device includes a separator housing for supporting the transfer medium in mass transfer relationship with the cathode exhaust stream and oxidant inlet stream so that the streams contact the transfer medium and the separator housing prevents bulk mixing of the streams. The transfer medium may comprise any of a variety of materials for sorbing a fluid substance consisting of polar molecules such as water molecules from a fluid stream containing fluid substances consisting of polar and non-polar molecules. An exemplary transfer medium includes a liquid water portion of a water saturated polyfluorosulfonic ionomer membrane.

In an alternative embodiment, the power plant of the present invention also includes components for processing hydrocarbon fuels into hydrogen rich reducing fluids appropriate for providing fuel to the anode. The fuel processing components include an auxiliary burner that provides heat to a steam generator and an autothermal reformer that receives the steam mixed with the hydrocarbon fuel and a small amount of air and converts it to a hydrogen rich stream appropriate for supplying hydrogen to the anode electrode as is well-known in the art. In such an embodiment, the direct mass and heat transfer device also passes process streams entering the auxiliary burner and autothermal reformer in mass transfer relationship with the cathode exhaust stream to transfer mass and heat such as water vapor to the streams entering the auxiliary burner and autothermal reformer. In a further preferred embodiment, the electrolyte of the fuel cell is a proton exchange membrane ("PEM").

In use of the direct mass and heat transfer fuel cell power plant, because the mass transfers directly from the cathode exhaust stream into the oxidant streams entering the power plant, a rate of uptake of the mass and therefore heat by the oxidant streams is not solely a function of ambient air temperature or humidity, but instead is a function of partial pressure differences between mass in the oxidant streams entering the power plant and the mass in the cathode exhaust exiting the plant. The present invention therefore permits greater water recovery than is possible with a plant using an ambient air cooled condensing heat exchanger which has a water recovery rate that is largely a function of ambient temperatures. With the present invention, if the ambient air temperature increases, a required heat transfer from the cathode exhaust to the entering oxidant streams for optimal plant efficiency decreases, however a mass transfer capacity of the direct transfer device remains constant. Additionally, complex, heavy and costly condensing heat exchange and/or cell pressurization apparatus are not needed, thereby increasing water balance and energy efficiency of the plant while decreasing weight, volume and cost.

Accordingly, it is a general object of the present invention to provide a direct mass and heat transfer fuel cell power plant that overcomes deficiencies of prior art fuel cell power plants.

It is a more specific object to provide a direct mass and heat transfer fuel cell power plant that is self-sufficient in water over a broad range of operating conditions.

It is yet another object to provide a direct mass and heat transfer fuel cell power plant that returns to the plant water and heat exiting the plant without pressurizing fluid streams within the plant and without utilizing a condensing heat exchanger.

It is still a further object to provide a direct mass and heat transfer fuel cell power plant that directly transfers mass and heat exiting the power plant back into oxidant streams entering fuel cells of the power plant to humidify and heat those streams.

It is yet another specific object to provide a direct mass and heat transfer fuel cell power plant that recovers water exiting the plant in a cathode exhaust stream to provide water as a reactant to components for processing hydrocarbon fuels utilized by the plant.

These and other objects and advantages of this invention will become more readily apparent when the following description is read in conjunction with the accompanying drawings.

### Brief Description of the Drawings

Figure 1 is a schematic representation of a direct mass and heat transfer fuel cell power plant constructed in accordance with the present invention.
Figure 2 is schematic representation of the Figure 1 direct mass and heat transfer fuel cell power plant utilizing components for processing hydrocarbon fuels into fuels appropriate for a fuel cell.

### Description of the Preferred Embodiments

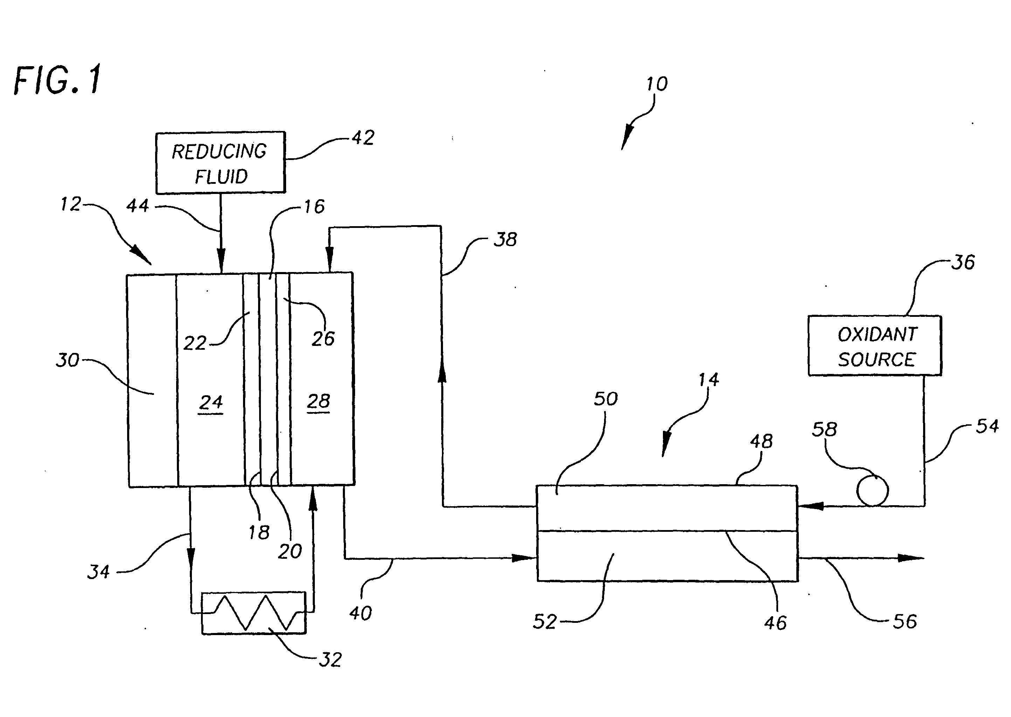

Referring to the drawings in detail, a direct mass and heat transfer fuel cell power plant of the present invention is shown and generally designated by the reference numeral 10. As best seen in Figure 1, the power plant 10 includes at least one fuel cell 12 and a direct mass and heat transfer device 14. The fuel cell 12 includes an electrolyte 16 such as a proton exchange membrane ("PEM") or an acid or base electrolyte having a first major surface 18 and an opposed second major surface 20; an anode electrode 22 supported by a porous anode support layer 24 in intimate contact with the first major surface 18 of the electrolyte 16; and, a cathode electrode 26 supported by a porous cathode support layer 28 in intimate contact with the second major surface 20 of the electrolyte 16. The anode and cathode porous support layers 24, 28 may be formed of porous or channeled graphite, carbon or metal sheets. The fuel cell 12 may be combined with other virtually identical fuel cells in a well-known manner to form a stack. As is common in the art, the fuel cell 12 may be enclosed within a structure 30 that defines manifolds for directing streams of reducing fluids and oxidants into and out of the cell, and the structure 30 also includes electrical conduction means for directing an electrical current generated by the fuel cell out of the cell 12 to an electricity using device 32, such as through a standard external load circuit 34.

An oxidant stream such as air is directed from an oxidant source 36 into the fuel cell 12 through a primary oxidant passage 38 that passes a stream of oxidant into the porous cathode support layer 28 so that the oxidant passes in contact with the cathode electrode 26 to provide oxidant to the electrode 26 for facilitating an electrochemical reaction at the cathode electrode and for sweeping into the oxidant stream by evaporation and/or entrainment water formed at the cathode electrode 26 as well as water carried through the electrolyte 16 from the anode electrode 22 or any humidification water in the oxidant stream. The oxidant stream then passes out of the cathode support layer 28 as a cathode exhaust stream within a cathode exhaust passage 40. A reducing fluid stream is directed from a reducing fluid supply source 42 through a reducing fluid inlet 44 into the porous anode support layer 24 so that the reducing fluid such as hydrogen comes into contact with the anode electrode 22. In a well-known manner, the reducing fluid electrochemically reacts at the anode electrode to produce protons and electrons, wherein the electrons flow through the external load circuit 34 to power the electrical device 32 such as electric motors powering a transport vehicle, while the protons travel through the electrolyte 16 to the cathode electrode 26. The electrons then continue through the circuit 34 to the cathode electrode where they react with the oxidant to form water and heat.

The direct mass and heat transfer device 14 is secured in fluid communication with both the primary oxidant passage 38 and the cathode exhaust passage 40. The direct mass and heat transfer device 14 includes a transfer medium means 46 for sorbing a fluid substance consisting of polar molecules within a first fluid stream containing fluid substances consisting of polar and non-polar molecules, such as a stream including water vapor and/or entrained liquid moisture (being a fluid substance consisting of polar molecules) and air (being a fluid substance consisting of non-polar molecules), and for desorbing the sorbed fluid into a second stream having a lower proportion of the fluid substance consisting of polar molecules than the first stream. Exemplary transfer medium means include a liquid water portion of an ion exchange resin or an ionomeric membrane such as a water saturated polyflourosulfonic ionomer membrane sold under the brand name "NAFION" by the E.I. DuPont company of Willmington, Delaware, U.S.A., or a liquid water portion of tubes made of the aforesaid "NAFION" membrane and sold under the brand name "ME-SERIES MOISTURE EXCHANGERS" by the Perma Pure, Inc. company of Toms River, New Jersey, U.S.A. An additional transfer medium includes a desiccant material capable of sorbing moisture from a gaseous stream and capable of desorbing the moisture into a gaseous stream such as finely powdered solid, crystalline alkali metal or alkaline earth metal compounds including active carbons, silica gel, activated aluminas and zeolites as described in more detail at Column 5, line 9 to Column 6, line 17 in U.S. Patent No. 5,542,968 issued on August 6, 1996 to Belding et al., which patent is hereby incorporated herein by reference.

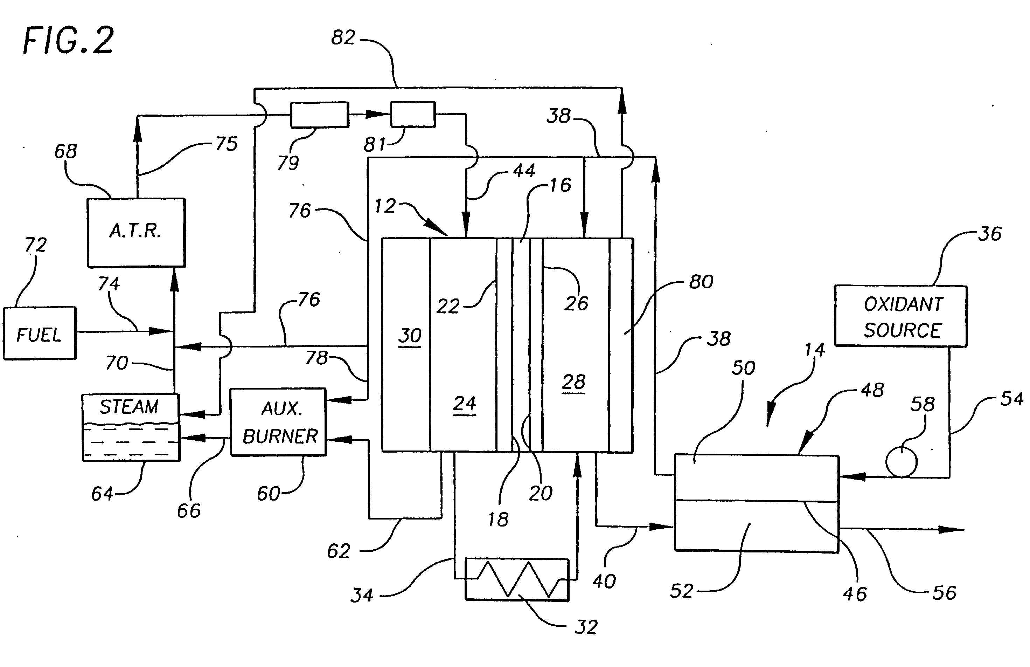

The direct mass transfer device 14 also includes a separator housing means 48 for supporting the transfer medium means 46 in mass transfer relationship with the cathode exhaust stream and the oxidant inlet stream so that both streams contact the mass transfer medium means and the separator housing means prevents bulk mixing of the cathode exhaust and oxidant inlet streams. Exemplary separator housing means may include an enclosure (shown schematically in FIGS. 1 and 2 at reference number 48) that supports the transfer medium means 46 between an inlet chamber 50 and an exhaust chamber 52. The oxidant inlet stream passes from the oxidant source 36 through an oxidant feed line 54 into and through the inlet chamber 50 into the primary oxidant passage 38, while the cathode exhaust stream passes from the cathode exhaust passage 40 into and through the exhaust chamber 52 to leave the plant 10 through a plant exhaust 56 in fluid communication with the exhaust chamber 52. Additional separator housing means 48 may include more complicated enclosures structured to enhance exposure of the oxidant inlet and cathode exhaust streams to the mass transfer medium means while preventing bulk mixing of the streams such as are common in known fluid to fluid heat exchanger art. An additional and cooperative aspect of the separator housing means 48 includes membrane portions supporting liquid water portions in the aforesaid "NAFION" membrane materials and tube portions supporting liquid water in the aforesaid "NAFION"-based tubes that are sold under the brand name "ME-SERIES MOISTURE EXCHANGERS" by Perma Pure, Inc. In such a separator housing means 48, "NAFION"-based mass transfer medium means will selectively transfer fluid substances consisting of polar molecules such as water vapor or entrained liquid moisture from a side of the membrane having a greatest concentration of the fluid substances consisting of polar molecules to a side having a lesser concentration in a manner well-known in the art.

A further exemplary separator housing means includes an enthalpy wheel that supports the aforesaid desiccant mass transfer medium means in a rotational disposition between a moisture laden exhaust stream and a dry inlet stream, as described in more detail at Column 4, line 35 to Column 5, line 4 and generally throughout the aforesaid U.S. Patent No. 5,542,968. The wheel includes a plurality of open ended passages running generally parallel to an axis of rotation of the wheel, wherein the passages are typically formed by winding a flat sheet of corrugated paper board including the mass transfer medium desiccant around a central hub of the wheel until a multi-layered media is built up that extends to an outer housing of a cassette supporting the wheel. Such enthalpy wheels are well-known in building air-conditioning arts, as further described in U.S. Patent No. 5,660,048 that issued on August 26, 1997 to Bedding et al. and is incorporated herein by reference. As a separator housing means, the enthalpy wheel would be supported to rotate about an axis parallel to flow through the inlet and exhaust chambers 50, 52 so that the cathode exhaust stream passes through about one-half of the wheel while simultaneously the oxidant inlet stream passes through the other half of the wheel. The transfer medium means desiccant on a first portion of the wheel within the exhaust chamber 52 would thereby sorb a fluid substance consisting of polar molecules such as water vapor or entrained liquid moisture from the cathode exhaust stream and, when the wheel rotates to position that first portion of the wheel into the inlet chamber 50, if the concentration of the fluid substance consisting of polar molecules within the inlet oxidant stream is less that the concentration of the fluid substance consisting of fluid molecules within the cathode exhaust stream, the sorbed polar molecule fluid substance held by the desiccant would be desorbed into the oxidant inlet stream to humidify and heat the oxidant.stream.

As shown in FIG. 1, the direct mass transfer fuel cell power plant 10 may also include a blower 58 positioned on the oxidant feed line 54 to variably accelerate flow of gaseous oxidant into the plant 10. Optionally, the blower 58 may be positioned along the primary oxidant passage 38 for the same purposes. It is stressed, however, that the blower is of a capacity to only slightly increase operating pressures of the oxidant to a range of from atmospheric pressure to about 6.89 kPa (1.0 P.S.I.A.) above atmospheric pressure, or from about 101.28 kPa (14.7 P.S.I.A.) to about 108.17 kPa (15.7 P.S.I.A.).

As shown in FIG. 2, the direct mass transfer fuel cell power plant 10 may also include fuel processing component means for processing hydrocarbon fuels into reducing fluids appropriate for providing fuel to an anode electrode of a fuel cell. Exemplary hydrocarbon fuels for powering such a plant 10 include gasoline, diesel fuel, butane, propane, natural gas, methanol, ethanol, etc.

In FIG. 2, components of the plant 10 that are identical to the FIG. 1 schematic representation of the plant 10 are given the same reference numerals. As shown in FIG. 2, the fuel processing component means may include: an auxiliary burner 60 (labelled "AUX. BURNER" in FIG. 2 for convenience) that burns a fuel including any excess reducing fluid such as hydrogen fed to the burner 60 through line 62 from the anode support layer 24 and cell structure 30; a steam generator 64 (labelled "STEAM" in FIG. 2) that receives heat directly from the burner in heat conduit 66 to generate steam from a supply of water; a reformer 68 that may be an autothermal reformer (labelled "A.T.R." in FIG. 2) that receives steam from the stream generator 64 mixed with the hydrocarbon fuel through steam line 70; a hydrocarbon fuel supply source 72 (labelled "FUEL" in FIG. 2) that supplies the fuel to the steam line through fuel line 74; and a reformed fuel discharge line 75 that directs the reformed fuel from the autothermal reformer 68 into the reducing fluid inlet 44. The fuel processing component means may also include components that are well-known in conventional steam reforming, autothermal reforming of various chemical compounds, and partial oxidation reforming, all of which include a reformer 68.

As seen in FIG. 2, where the plant 10 includes such fuel processing components, the primary oxidant passage 38 that supplies the oxidant stream to the cathode support layer may be split to include a secondary oxidant passage 76 that directs a portion of the oxidant inlet stream into the fuel processing component means such as into the steam line 70 to become process oxidant for the autothermal reformer so that a portion of the mass and heat such as water vapor recovered from the cathode exhaust into the oxidant stream by the mass transfer device 14 is directed into the steam and fuel mixture entering the autothermal reformer. In that manner, the overall heat and steam requirements of the auxiliary burner 60 and steam generator 64 are lessened.

To further support the fuel processing components, the primary oxidant passage 38 may be further split to include a tertiary oxidant passage 78 that directs a portion of the oxidant inlet stream into the auxiliary burner 60 to become process oxidant for the burner 60 thereby directing some of the mass and heat such as water vapor transferred from the cathode exhaust stream by the mass transfer device 14 into the burner 60 to effectively decrease energy requirements of the burner 60 and direct water recovered from the plant cathode exhaust stream back into the plant 10 to effectively supplement water within the steam generator 64 and enhance water self-sufficiency of the plant 10. The fuel processing components are of relatively conventional design that are generally well-known in the chemical processing arts wherein there is a need to generate hydrogen enriched fluid from common hydrocarbon sources. For example, autothermal reformers in such processes typically burn a portion of the fuel received in the fuel-steam mixture to reach temperatures approximating 927°C (1,700 degrees fahrenheit (hereafter "°F")). It is also well-known in such reforming processes to pass autothermal reformer product gasses through a water shift reactor 79 and then a selective oxidizer 81 and then into the reducing fluid inlet 44 so that a reducing fluid stream in the inlet 44 includes hydrogen and carbon dioxide, with very small amounts of carbon monoxide.

In an additional embodiment of the direct mass transfer fuel cell power plant 10 a coolant water loop means may be included for recycling water recovered from the fuel cell 12 to the fuel processing components to further enhance plant water self-sufficiency. The coolant water loop means includes a fine pore water plate 80 adjacent the cathode support layer 28 that sorbs water formed at the cathode electrode and/or water passing through the electrolyte 16; and a coolant water line 82 that directs water in the porous water plate 80 into the fuel processing component means such as into the steam generator 64 to further supplement the water supply of the steam generator. As can be seen in FIG. 2, some of that water then passes through the steam line 70 into the autothermal reformer 68, and from there through the reformed fuel discharge line 75 and reducing fluid inlet 44 back into the anode support layer 24, and may then pass through the electrolyte 16 and back into the porous water plate 80 to complete a "loop" of the coolant water loop means. The coolant water loop means may also include a fine pore water plate adjacent the anode support layer 24, and in such a sequence between each cell in a stack, as shown in more detail in U.S. Patent No. 5,505,994 that issued on April 26, 1996 to Meyer et al., which patent is owned by the assignee of the present invention and which patent is hereby incorporated herein by reference.

A design estimate of performance of the direct mass transfer fuel cell power plant 10 as shown in FIG. 1 produces data demonstrating substantial advantages over comparable fuel cell power plants that do not employ a mass transfer device 14. The design estimate utilizes a "NAFION"-based membrane having a water transfer rating of about 160 pounds of water per hour as the transfer medium within a separator housing that passes an oxidant inlet stream in mass transfer relationship with a cathode exhaust stream. For purposes of the design estimate, the fuel cell has a power capacity of 50 kilowatts. The oxidant inlet stream leaves the blower 58 at a pressure of 106.11 kPa (15.4 PSIA), a flow of 5.38 m³/min (190 CFM), a temperature of 25°C (77°F), and a dew point of less than 0°C (32°F). After exiting the mass transfer device 14, the oxidant stream within the primary oxidant passage 38 is saturated at 63.9°C (147°F). The cathode exhaust stream within the cathode exhaust passage 40 leaves the fuel cell 12 and enters the mass transfer device 14 at 88°C (190°F) with a dew point of 66.7°C (152°F); and the cathode stream then leaves the mass transfer device 14 in the plant exhaust at a temperature of 66.7°C (152°F) and a dew point of 35°C (95°F), and a flow rate of 6.12 m³/min (216 CFM).

As is apparent by contrasting the characteristics of the oxidant stream between the primary oxidant passage 38 and the blower 58 the direct mass transfer device 14 substantially increases moisture and heat content of the oxidant stream entering the cathode support layer 28 with virtually no energy expenditure of the plant 10, and no ancillary piping or control apparatus to direct liquid condensate back into the cathode inlet stream. The components that make up the direct mass and heat transfer fuel cell power plant 10 are made of conventional materials well-known in the art, except for the materials that are described in detail herein, such as the transfer medium means.

While the present invention has been described and illustrated with respect to a particular construction and method of use of the direct mass and heat transfer fuel cell power plant, it is to be understood that the present invention is not to be limited to the described and illustrated embodiments. For example, while reference has been made to water requirements of a fuel cell using a PEM as an electrolyte, it is to be understood that any electrolyte common to known fuel cells may be employed in the plant. Accordingly, reference should be made primarily to the following claims rather than the foregoing description to determine the scope of the invention.

## Claims

1. A direct mass and heat transfer fuel cell power plant (10) for generating electrical energy from a reducing fluid and an oxidant fluid, the plant (10) comprising:
a. at least one fuel cell (12), including;
i. an electrolyte (16) having a first major surface (18) and an opposed second major surface (20); and
ii. an anode electrode (27) supported by a porous anode support layer (24) in intimate contact with the first major surface (18) of the electrolyte (16) and a cathode electrode (26) supported by a porous cathode support layer (28) in intimate contact with the second major surface (20) of the electrolyte (16), wherein the porous anode support layer (24) is positioned for passing a stream of the reducing fluid in contact with the anode electrode (22) and the porous cathode support layer (28) passes a stream of the oxidant in contact with the cathode electrode (26);
b. fuel processing component means (60; 64; 68) for processing hydrocarbon fuels into hydrogen rich reducing fluids appropriate for providing fuel to the anode electrode (22);
c. a primary oxidant passage (38) that passes an oxidant inlet stream from a supply (36) of oxidant into the porous cathode support layer (28);
d. a secondary oxidant passage (76) that passes a portion of the oxidant inlet stream into the fuel processing component means (60; 64; 68) as a process oxidant for the fuel processing component means;
e. a cathode exhaust passage (40) that passes a cathode exhaust stream out of the porous cathode support layer (28); and,
f. a direct mass and heat transfer device secured in fluid communication with the primary and secondary oxidant passages (38; 76) and with the cathode exhaust passage (40), including;
i. a transfer medium means (46) for sorbing a fluid substance consisting of polar molecules within the cathode exhaust stream and for desorbing the fluid substance consisting of polar molecules into the oxidant inlet stream; and
i. a separator housing means (48) for supporting the transfer medium means (46) in mass transfer relationship with the cathode exhaust stream and oxidant inlet stream so that both streams contact the mass transfer medium means (46), and for preventing bulk mixing of the cathode exhaust and oxidant inlet streams.

2. The direct mass and heat transfer fuel cell power plant (10) of Claim 1, wherein the fuel processing component means includes an auxiliary burner that provides heat to a steam generator (64), a reformer (68) that receives steam from the steam generator (64) mixed with the hydrocarbon fuel through a steam line (70) between the steam generator (64) and the reformer (68), a supply source (72) of the hydrocarbon fuel that feeds the hydrocarbon fuel into the steam line (70), and a reformed fuel discharge line (75) that directs the reformed fuel into the anode support layer (24), and wherein the secondary oxidant passage (76) directs a portion of the oxidant inlet stream into the steam line (70).

3. The direct mass and heat transfer fuel cell power plant (10) of Claim 2, wherein the plant includes a tertiary oxidant passage (78) in fluid communication with the direct mass and heat transfer device (14) that passes a portion of the oxidant inlet stream into the auxiliary burner (60).

4. The direct mass and heat transfer fuel cell power plant (10) of Claim 3, wherein the transfer medium means (46) comprises a liquid water portion of an ionomeric membrane and the separator housing means (48) comprises membrane portions supporting the liquid water of the ionomeric membrane.

5. The direct mass and heat transfer fuel cell power plant (10) of Claim 3, wherein the transfer medium means (46) comprises a liquid water portion of ionomeric membrane tubes and the separator housing means (48) comprises tube portions supporting the liquid water in the ionomeric membrane tubes.

6. The direct mass and heat transfer fuel cell power plant (10) of Claim 3, wherein the transfer medium means (46) comprises a desiccant material capable of sorbing moisture from a gaseous stream and capable of desorbing moisture into a gaseous stream.

7. The direct mass and heat transfer fuel cell power plant (10) of Claim 6, wherein the separator housing means (48) comprises an enthalpy wheel supporting the desiccant material in a plurality of passages running generally parallel to an axis of rotation of the enthalpy wheel and the enthalpy wheel is rotationally supported within inlet and exhaust chambers of the separator housing (48) so that the wheel rotates about an axis parallel to flow of the oxygen inlet stream through the inlet chamber and the cathode exhaust stream through the exhaust chamber to directly transfer sorbed moisture from the exhaust stream to the oxidant inlet stream.

8. The direct mass and heat transfer fuel cell power plant (10) of Claim 1, wherein the electrolyte (16) is a proton exchange membrane.

9. A method of operating a fuel cell power plant for direct transfer of mass and heat, the method comprising the steps of:
a. providing at least one fuel cell (12), including;
i. an electrolyte (16) having a first major surface (18) and an opposed second major surface (20); and
ii. an anode electrode (22) supported by a porous anode support layer (24) in intimate contact with the first major surface (12) of the electrolyte (16) and a cathode electrode (26) supported by a porous cathode support layer (28) in intimate contact with che second major surface (20) of the electrolyte (16), wherein che porous anode support layer (24) passes a stream of the reducing fluid in contact with the anode electrode (22) and the porous cathode support layer (28) passes a stream of the oxidant in contact with the cathode electrode (26);
b. passing an oxidant inlet stream through a primary oxidant passage (58) at about ambient pressure from a supply (36) of oxidant into the porous cathode support layer (28);
c. passing a cathode exhaust stream through a cathode exhaust passage (40) out of the porous cathode support layer (28); and,
d. directing the oxidant inlet stream and cathode exhaust stream in mass transfer relationship within a direct mass and heat transfer device (14) by passing the oxidant inlet stream and cathode exhaust stream in contact with a transfer medium (46) for sorbing a fluid substance consisting of polar molecules within the cathode exhaust stream and for desorbing the fluid substance consisting of polar molecules into the oxidant inlet stream by further supporting the mass transfer medium (46) within a separator housing (48) so that both streams contact the mass transfer medium and both streams are prevented from bulk mixing together within said separator housing (48), further comprising the step of passing a portion of the oxidant inlet stream through a secondary oxidant passage (76) into fuel processing components (60; 64; 68) of the plant (10) as a process oxidant for the fuel processing components (60; 64; 68)

10. The method of operating the fuel cell power plant (10) of Claim 9, further comprising the step of passing a portion the oxidant inlet stream through the secondary oxidant passage (76) into a steam line (76) providing steam and hydrocarbon fuel to a reformer (68) of the plants (10) and passing a portion of the oxidant inlet stream through a tertiary oxidant passage (78) to an auxiliary burner (60) providing heat to a steam generator (64) of the plant (10).

11. The method of operating the fuel cell power plant (10) of Claim 9, further comprising the step of directing the oxidant inlet stream and cathode exhaust stream in mass transfer relationship by passing the oxidant inlet stream and cathode exhaust stream in contact with a liquid water portion of an ionomeric membrane.

12. The method of operating the fuel cell power plant (10) of Claim 9, further comprising the step of directing the oxidant inlet stream and cathode exhaust stream in mass transfer relationship by passing the oxidant inlet stream and cathode exhaust stream in contact with a liquid water portion of an ionomeric exchange tube.

## Patentansprüche

1. Brennstoffzellen-Stromerzeugungsanlage (10) mit direkter Massen- und Wärmeübertragung zur Erzeugung elektrischer Energie aus einem reduzierenden Fluid und einem Oxidationsmittelfluid, aufweisend:
a) zumindest eine Brennstoffzelle (12), aufweisend:
i. einen Elektrolyten (16) mit einer ersten Hauptfläche (18) und einer entgegengesetzten zweiten Hauptfläche (20); und
ii. eine von einer porösen Anodenträgerschicht (24) gehaltene Anodenelektrode (27) in engem Kontakt mit der ersten Hauptfläche (18) des Elektrolyten (16) und eine von einer porösen Kathodenträgerschicht (28) gehaltene Kathodenelektrode (26) in engem Kontakt mit der zweiten Hauptfläche (20) des Elektrolyten (16), wobei die poröse Anodenträgerschicht (24) positioniert ist zum Strömen eines Stroms des reduzierenden Fluids in Kontakt mit der Anodenelektrode (22) und die poröse Kathodenträgerschicht (28) zum Strömen eines Stroms des Oxidationsmittels in Kontakt mit der Kathodenelektrode (26).
b) Brennstoff-Aufbereitungskomponenten-Einrichtung (60, 64, 68) zum Aufbereiten von Kohlenwasserstoff-Brennstoffen zu wasserstoffreichen reduzierenden Fluiden, welche geeignet sind, Brennstoff für die Anodenelektrode (22) bereitzustellen;
c) eine primäre Oxidationsmittelleitung (38), welche einen Oxidationsmitteleinlassstrom von einer Oxidationsmittelquelle (36) in die poröse Kathodenträgerschicht (28) leitet;
d) eine sekundäre Oxidationsmittelleitung (76), welche einen Teil des Oxidationsmitteleinlassstroms in die Brennstoff-Aufbereitungskomponenten-Einrichtung (60, 64, 68) als Aufbereitungs-Oxidationsmittel für die Brennstoff-Aufbereitungskomponenten-Einrichtung leitet;
e) eine Kathodenabgasleitung (40), welche einen Kathodenabgasstrom aus der porösen Kathodenträgerschicht (28) leitet; und
f) eine Vorrichtung zur direkten Massen- und Wärmeübertragung (14), welche in Fluidverbindung mit der primären und der sekundären Oxidationsmittelleitung (38; 76) und mit der Kathodenabgasleitung (40) ist, aufweisend:
i. eine Übertragungsmedium-Einrichtung (46) zum Absorbieren einer Fluid-Substanz, welche aus polaren Molekülen besteht, aus dem Kathodenabgasstrom und zum Desorbieren der Fluidsubstanz, bestehend aus polaren Molekülen, in dem Oxidationsmitteleinlassstrom; und
ii. eine Separatorgehäuse-Einrichtung (48) zum Halten der Übertragungsmedium-Einrichtung (46) in einem Massenübertragungsverhältnis mit dem Kathodenabgasstrom und dem Oxidationsmitteleinlassstrom, so dass beide Ströme die Massenübertragungsmedium-Einrichtung (46) kontaktieren, und zur Verhinderung des Durchmischens des Großteils der Kathodenabgas- und Oxidationsmitteleinlassstroms.

2. Die Brennstoffzellen-Stromerzeugungsanlage mit direkter Massen- und Wärmeübertragung nach Anspruch 1, bei welcher die Brennstoffaufbereitungskomponenten-Einrichtung einen Hilfsbrenner (60), der Wärme für einen Dampfgenerator bereitstellt, einen Reformer (68), welcher Dampf aus dem Dampfgenerator, vermischt mit dem Kohlenwasserstoff, Brennstoff durch eine Dampfleitung (70) zwischen dem Dampfgenerator (64) und dem Reformer (68) aufnimmt, eine Vorratsquelle (72) des Kohlenwasserstoff-Brennstoffs, welche den Kohlenwasserstoff-Brennstoff in die Dampfleitung (70) führt, und eine Auslassleitung (75) für reformierten Brennstoff, aufweist, welche den reformierten Brennstoff in die Anodenträgerschicht (24) leitet, und bei welcher die sekundäre Oxidationsmittelleitung (76) einen Bereich des Oxidationsmitteleinlassstroms zu der Dampfleitung (70) leitet.

3. Die Brennstoffzellen-Stromerzeugungsanlage (10) mit direkter Massenund Wärmeübertragung nach Anspruch 2, bei welcher die Anlage eine tertiäre Oxidationsmittelleitung (78) in Fluidverbindung mit der Vorrichtung zur direkten Massen- und Wärmeübertragung (14) aufweist, welche einen Teil des Oxidationsmitteleinlassstroms in den Hilfsbrenner (69) leitet.

4. Die Brennstoffzellen-Stromerzeugungsanlage (10) mit direkter Massenübertragung nach Anspruch 3, bei welcher die Übertragungsmedium-Einrichtung (46) einen Bereich mit flüssigem Wasser einer ionomeren Membran aufweist, und die Separatorgehäuseeinrichtung (48) Membranbereiche aufweist, welche das flüssige Wasser der ionomeren Membran halten.

5. Die Brennstoffzellen-Stromerzeugungsanlage (10) mit direkter Massenund Wärmeübertragung nach Anspruch 3, bei welcher die Übertragungsmedium-Einrichtung (46) einen Bereich mit flüssigem Wasser von ionomeren Membranröhren aufweist und die Separatorgehäuseeinrichtung (48) Röhrenbereiche aufweist, welche das flüssige Wasser in den ionomeren Membranenröhren halten.

6. Brennstoffzellen-Stromerzeugungsanlage (10) mit direkter Massen- und Wärmeübertragung nach Anspruch 3, bei welcher die Übertragungsmediumeinrichtung (46) ein Trockenmittelmaterial aufweist, welches in der Lage ist, Feuchtigkeit aus einem Gasstrom zu absorbieren, und in der Lage ist, Feuchtigkeit in einen Gasstrom zu desorbieren.

7. Brennstoffzellen-Stromerzeugungsanlage (10) mit direkter Massen- und Wärmeübertragung nach Anspruch 6, bei welcher die Separatorgehäuseeinrichtung (48) ein Enthalpie-Rad aufweist, welches das Trockenmittelmaterial in einer Mehrzahl von Leitungen hält, die im Allgemeinen parallel zu einer Drehachse des Enthalpie-Rads verlaufen, und das Enthalpie-Rad drehbar innerhalb der Einlass- und Auslasskammer des Separatorgehäuses (48) gehalten ist, so dass das Rad sich um eine Achse dreht, die parallel ist zur Strömung des Oxidationsmitteleinlassstroms durch die Einlasskammer und zu dem Kathodenabgasstrom durch die Abgaskammer, um direkt absorbierte Feuchtigkeit aus dem Abgasstrom zu dem Oxidationsmitteleinlassstrom zu übertragen.

8. Brennstoffzellen-Stromerzeugungsanlage (10) mit direkter Massen- und Wärmeübertragung nach Anspruch 1, bei welcher der Elektrolyt eine Protonaustauschmembran ist.

9. Verfahren zum Betreiben einer Brennstoffzellen-Stromerzeugungsanlage (10) mit direkter Massen- und Wärmeübertragung, wobei das Verfahren die folgenden Schritte aufweist:
a) Bereitstellen zumindest einer Brennstoffzelle (12), aufweisend:
i. einen Elektrolyten (16) mit einer ersten Hauptfläche (18) und einer entgegengesetzten zweiten Hauptfläche (20); und
ii. eine durch eine poröse Anodenträgerschicht (24) gehaltene Anodenelektrode in engem Kontakt mit einer ersten Hauptfläche (18) des Elektrolyten (16) und einer durch eine poröse Kathodenträgerschicht (28) gehaltene Kathodenelektrode (26) in engem Kontakt mit der zweiten Hauptfläche (20) des Elektrolyten (16), wobei die poröse Anodenträgerschicht (24) einen Strom des reduzierenden Fluids in Kontakt mit der Anodenelektrode (22) leitet und die poröse Kathodenträgerschicht (28) einen Oxidationsmittelstrom in Kontakt mit der Kathodenelektrode (26) leitet;
b) Leiten eines Oxidationsmitteleinlassstroms durch eine primäre Oxidationsmittelleitung (38) bei ungefähr Umgebungsdruck aus einer Oxidationsmittelquelle (36) in die poröse Kathodenträgerschicht (28);
c) Leiten eines Kathodenabgasstroms durch eine Kathodenabgasleitung (40) aus der porösen Kathodenträgerschicht (28); und
d) Leiten des Oxidationsmitteleinlassstroms und Kathodenabgasstroms in einem Massenübertragungsverhältnis innerhalb einer Vorrichtung (14) zur direkten Massen- und Wärmeübertragung durch Leiten des Oxidationsmitteleinlasstroms und des Kathodenabgasstroms in Kontakt mit einem Übertragungsmedium (46) zum Absorbieren einer Fluidsubstanz, bestehend aus polaren Molekülen, aus dem Kathodenabgasstrom und zum Desorbieren der Fluidsubstanz, bestehend aus polaren Molekülen, in den Oxidationsmitteleinlassstrom, ferner durch Halten des Massenübertragungsmediums (46) innerhalb eines Separatorgehäuses (48), so dass beide Ströme das Massenübertragungsmedium kontaktieren und verhindert wird, dass ein Großteil der beiden Ströme sich innerhalb des Separatorgehäuses (48) vermischt, ferner aufweisend den Schritt des Leitens eines Teils des Oxidationsmitteleinlassstroms durch eine sekundäre Oxidationsmittelleitung (76) zu den Brennstoffaufbereitungskomponenten (60; 64; 68) der Anlage (10) als ein Aufbereitungsoxidationsmittel für die Brennstoffaufbereitungskomponenten (60; 64; 68).

10. Verfahren zum Betreiben einer Brennstoffzellen-Stromerzeugungsanlage (10) nach Anspruch 9, ferner aufweisend den Schritt des Leitens eines Teils des Oxidationsmitteleinlassstroms durch die sekundäre Oxidationsmittelleitung (76) in eine Dampfleitung (70), welche Dampf und Kohlenwasserstoffbrennstoff für einen Reformer (68) der Anlage (10) bereitstellt, und Leiten eines Teils des Oxidationsmitteleinlassstroms durch eine tertiäre Oxidationsmittelleitung (78) zu einem Hilfsbrenner (60), welcher Wärme für einen Dampfgenerator (64) der Anlage bereitstellt.

11. Verfahren zum Betreiben der Brennstoffzellen-Stromerzeugungsanlage (10) nach Anspruch 9, ferner aufweisend den Schritt des Leitens des Oxidationsmitteleinlassstroms und des Kathodenabgasstroms in einem Massenübertragungsverhältnis durch Leiten des Oxidationsmitteleinlassstroms und Kathodenabgasstroms in Kontakt mit einem Bereich mit flüssigem Wasser einer ionomeren Membran.

12. Verfahren zum Betreiben der Brennstoffzellen-Stromerzeugungsanlage (10) nach Anspruch 9, ferner aufweisend den Schritt des Leitens des Oxidationsmitteleinlassstroms unddes Kathodenabgasstroms in einem Masseübertragungsverhältnis durch Leiten des Oxidationsmitteleinlassstroms und des Kathodenabgasstroms in Kontakt mit einem Bereich mit flüssigem Wasser einer ionomeren Austauschröhre.

## Revendications

1. Centrale (10) à piles à combustibles, à transfert direct de chaleur et de masse destinée à la génération d'énergie électrique à partir d'un fluide réducteur et d'un fluide oxydant, la centrale comprenant :
a) au moins une pile à combustible (12), comprenant :
i) un électrolyte (16) comportant une première surface principale (18) et une seconde surface principale opposée (20) ; et
ii) une anode (27) supportée par une couche de support d'anode poreuse (24) en contact étroit avec la première surface principale (18) de l'électrolyte (16) et une cathode (26) supportée par une couche de support de cathode poreuse (28) en contact étroit avec la seconde surface principale (20) de l'électrolyte (16), dans laquelle la couche de support d'anode poreuse (24) est placée de façon à faire passer un flux de fluide réducteur au contact de l'anode (22) et la couche de support de cathode poreuse (28) fait passer un flux d'oxydant, au contact de la cathode (26) ;
b) un dispositif à composants de transformation du combustible (60; 64; 68) pour la transformation des hydrocarbures en fluides réducteurs riches en hydrogène, appropriés pour fournir le combustible à l'anode (22) ;
c) un conduit principal d'oxydant (38) qui fait passer un flux d'entrée d'oxydant à partir d'une source (36) d'oxydant dans la couche poreuse (28) de support de cathode ;
d) un conduit secondaire d'oxydant (76) qui fait passer une partie du flux d'entrée d'oxydant dans le dispositif à composants de transformation du combustible (60; 64; 68), utilisé comme oxydant de transformation pour le dispositif à composants de transformation du combustible (60; 64; 68) ;
e) un conduit de sortie de cathode (40) qui fait passer le flux de sortie de cathode hors de la couche de support de cathode poreuse (28) ; et
f) un dispositif de transfert direct de chaleur et de masse (14) maintenu en communication de fluide avec les conduits principal et secondaire d'oxydant (38; 76) et le conduit de sortie de cathode, comprenant :
i) un dispositif à milieu de transfert (46) pour adsorber une substance fluide constituée de molécules polaires au sein du flux de sortie de cathode et désorber la substance fluide constituée de molécules polaires dans le flux d'entrée d'oxydant ; et
ii) un dispositif à compartiment séparateur (48) assurant le support du dispositif à milieu de transfert (46) dans une relation de transfert de masse avec le flux de sortie de cathode et le flux d'entrée d'oxydant de sorte que les deux flux soient au contact du dispositif à milieu de transfert de masse (46) et de façon à empêcher un mélange en volume des flux de sortie de cathode et d'entrée d'oxydant.

2. Centrale (10) à piles à combustibles, à transfert direct de chaleur et de masse, selon la revendication 1, dans laquelle le dispositif à composants de transformation du combustible comprend une chambre de combustion auxiliaire (60) qui fournit la chaleur à un générateur de vapeur (64), un reformeur (68) qui reçoit la vapeur du générateur de vapeur (64) mélangée à l'hydrocarbure par l'intermédiaire d'une conduite de vapeur (70) située entre le générateur de vapeur (64) et le reformeur (68), une source d'alimentation (72) en hydrocarbure qui alimente la conduite de vapeur (70) en hydrocarbure et une conduite d'évacuation de combustible reformé (75) qui dirige le combustible reformé dans la couche de support d'anode (24) et où le conduit secondaire d'oxydant (76) dirige une partie du flux d'entrée d'oxydant dans la conduite de vapeur (70).

3. Centrale (10) à piles à combustibles, à transfert direct de chaleur et de masse, selon la revendication 2, dans laquelle la centrale comprend un conduit d'oxydant tertiaire (78) en communication de fluide avec le dispositif de transfert de chaleur et de masse (14) qui fait passer une partie du flux d'entrée d'oxydant dans la chambre de combustion auxiliaire (60).

4. Centrale (10) à piles à combustibles, à transfert direct de chaleur et de masse, selon la revendication 3, dans laquelle le dispositif à milieu de transfert (46) comprend une partie de membrane ionomère contenant de l'eau liquide et le dispositif à compartiment séparateur (48) comprend des parties de membrane supportant l'eau liquide de la membrane ionomère.

5. Centrale (10) à piles à combustibles, à transfert direct de chaleur et de masse, selon la revendication 3, dans laquelle le dispositif à milieu de transfert (46) comprend une partie de tubes de membrane ionomère contenant de l'eau liquide et le dispositif à compartiment séparateur (48) comprend des parties tubulaires supportant l'eau liquide des tubes de la membrane ionomère.

6. Centrale (10) à piles à combustibles, à transfert direct de chaleur et de masse, selon la revendication 3, dans laquelle le dispositif à milieu de transfert (46) comprend une matière déshydratante capable d'adsorber l'humidité d'un flux gazeux et capable de désorber l'humidité dans un flux gazeux.

7. Centrale (10) à piles à combustibles, à transfert direct de chaleur et de masse, selon la revendication 6, dans laquelle le dispositif à compartiment séparateur (48) comprend une roue d'enthalpie supportant la matière déshydratante dans plusieurs conduits globalement parallèles à un axe de rotation de la roue d'enthalpie et la roue d'enthalpie est supportée en rotation à l'intérieur des chambres d'admission et de refoulement du compartiment séparateur (48) de sorte que la roue tourne autour d'un axe parallèle à la direction du flux d'entrée d'oxygène au travers de la chambre d'admission et le flux de sortie de cathode au travers de la chambre de refoulement pour transférer l'humidité adsorbée du flux de refoulement directement au flux d'admission d'oxydant.

8. Centrale (10) à piles à combustibles, à transfert direct de chaleur et de masse, selon la revendication 1, dans laquelle l'électrolyte (16) est une membrane échangeuse de protons.

9. Procédé d'exploitation d'une centrale (10) à piles à combustibles, à transfert direct de chaleur et de masse, ce procédé comprenant les étapes suivantes :
a) la fourniture d'au moins une pile à combustible (12), comprenant :
i) un électrolyte (16) ayant une première surface principale (18), une seconde surface principale opposée (20) ; et
ii) une anode (22) supportée par une couche de support d'anode poreuse (24) en contact étroit avec la première surface principale (18) de l'électrolyte (16) et une cathode (26) supportée par une couche de support de cathode poreuse (28) en contact étroit avec la seconde surface principale (20) de l'électrolyte (16), où la couche de support d'anode poreuse (24) est placée de façon à faire passer un flux de fluide réducteur au contact de l'anode (22) et la couche de support de cathode poreuse (28) fait passer un flux d'oxydant, au contact de la cathode (26);
b) le passage d'un flux d'oxydant d'entrée au travers d'un conduit d'oxydant principal (38), à pression proche de la pression ambiante, provenant d'une source d'oxydant (36) dans la couche de support de cathode poreuse (28) ;
c) le passage d'un flux de sortie de cathode au travers d'un conduit de sortie de cathode (40) hors de la couche de support de cathode poreuse (28) ; et
d) la direction du flux d'entrée d'oxydant et du flux de sortie de cathode, en relation de transfert de masse, au sein d'un dispositif de transfert direct de chaleur et de masse (14), en faisant passer le flux d'entrée d'oxydant et le flux de sortie de cathode au contact d'un milieu de transfert (46) pour adsorber une substance fluide constituée de molécules polaires au sein du flux de sortie de cathode et pour désorber la substance fluide constituée de molécules polaires dans le flux d'entrée d'oxydant, en supportant également le milieu de transfert de masse (46) au sein d'un compartiment séparateur (48) de sorte que les deux flux soient au contact du milieu de transfert de masse et pour empêcher les deux flux de se mélanger en volume au sein dudit compartiment séparateur (48), comprenant en outre l'étape consistant à faire passer une partie du flux d'entrée d'oxydant au travers d'un conduit secondaire d'oxydant (76) dans les composants de transformation du combustible (60; 64; 68) de la centrale (10), pour servir d'oxydant de transformation pour les composants de transformation du combustible (60; 64; 68).

10. Procédé d'exploitation d'une centrale (10) à piles à combustibles, selon la revendication 9, comprenant en outre l'étape consistant à faire passer une partie du flux d'entrée d'oxydant au travers d'un conduit d'oxydant secondaire (76) dans une conduite de vapeur (70) fournissant de la vapeur et de l'hydrocarbure à un reformeur (68) de la centrale (10) et faisant passer une partie du flux d'entrée d'oxydant au travers d'un conduit d'oxydant tertiaire (78) vers une chambre de combustion (60) fournissant la chaleur à un générateur de vapeur (64) de la centrale (10).

11. Procédé d'exploitation d'une centrale (10) à piles à combustibles, selon la revendication 9, comprenant en outre l'étape consistant à diriger le flux d'entrée d'oxydant et le flux de sortie de cathode, en une relation de transfert de masse, en faisant passer le flux d'entrée d'oxydant et le flux de sortie de cathode au contact d'une partie de membrane ionomère contenant de l'eau liquide.

12. Procédé d'exploitation d'une centrale (10) à piles à combustibles, selon la revendication 9, comprenant en outre l'étape consistant à diriger le flux d'entrée d'oxydant et le flux de sortie de cathode, en une relation de transfert de masse, en faisant passer le flux d'entrée d'oxydant et le flux de sortie de cathode au contact d'une partie de tube ionomère échangeur contenant de l'eau liquide.
